# EUROPÄISCHE PATENTSCHRIFT

(11) **EP 1 878 614 B1**
(45) Veröffentlichungstag und Bekanntmachung des Hinweises auf die Patenterteilung: **12.01.2011**
(21) Anmeldenummer: 07012666.9
(22) Anmeldetag: 28.06.2007
(51) Int. Cl.: B60P 7/08, B60R 7/08

(54) **Laderaumfunktionsvorrichtung für ein Kraftfahrzeug**
Storage space functional device for a motor vehicle
Dispositif de fonctionnement d'une cale pour véhicule automobile

(30) Priorität: 12.07.2006 DE 102006033384
(43) Veröffentlichungstag der Anmeldung: 16.01.2008
(73) Patentinhaber: BOS GmbH & Co. KG, 73760 Ostfildern (DE)
(72) Erfinder: Bohlke, Hartmut, 72369 Wuppertal (DE); Sitzler, Wolfgang, 42111 Wuppertal (DE); Göbbels, Andreas, 51515 Kürten (DE)
(74) Vertreter: Patentanwälte Ruff, Wilhelm, Beier, Dauster & Partner

(56) Entgegenhaltungen:
- EP-A- 1 108 608
- WO-A-2005/028306
- DE-U1- 20 317 183
- US-A- 4 248 558

## Beschreibung

Die Erfindung betrifft eine Laderaumfunktionsvorrichtung für ein Kraftfahrzeug mit wenigstens einem länglichen Führungsprofil, das in einer Begrenzungsfläche des Laderaumes derart eingebettet ist, dass eine Oberseite des Führungsprofils zumindest im Wesentlichen bündig mit der Begrenzungsfläche abschließt und an dem wenigstens ein Funktionselement längs verlagerbar und in unterschiedlichen Positionen blockierbar angeordnet ist.

Eine derartige Laderaumfunktionsvorrichtung ist aus der DE 101 49 186 A1 bekannt. Die bekannte Laderaumfunktionsvorrichtung weist ein schienenförmiges Führungsprofil auf, das in einem Laderaumboden integriert ist. In dem Führungsprofil können ein oder mehrere Funktionselemente verschiebbar gehalten sein. Das wenigstens eine Funktionselement ist bei der DE 101 49 186 A1 mit einer lastaufnehmenden Öse versehen, an dem Verzurrgurte oder andere Halteeinrichtungen zur Sicherung von Ladegut befestigt werden können. Das Funktionselement ist in seiner Funktionsposition in einer bodenseitig in dem Führungsprofil vorgesehenen Rastleiste in Längsrichtung des Führungsprofiles fixiert. In Hochrichtung des Führungsprofiles sind im Bereich der Oberseite des Führungsprofiles zwei aufeinander zuweisende Stegschenkel vorgesehen. Das Funktionselement ist mit einem im Querschnitt T-förmigen Schlittenprofil versehen, das aufgrund der Stegabschnitte nicht nach oben abgehoben werden kann.

Aus der EP 1108608 A1 ist eine Führungsschiene für einen Boden eines Laderaumes eines Kraftfahrzeugs bekannt, in dem ein mit einer Halteöse versehenes Befestigungselement verschiebbar gelagert ist. Das Befestigungselement wird mittels eines Federtellers gegen obere Führungskanten der Führungsschiene gedrückt. Eine Unterseite des Federtellers ist am Boden der Führungsschiene gleitbeweglich, so dass das Befestigungselement durch manuelles Drücken des Befestigungselementes entgegen der Druckkraft des Federtellers von den Führungskanten entfernt und längs der Führungsschiene verfahren werden kann.

Die DE 20317183 U1 beschreibt eine Vorrichtung zum Befestigen von Spannelementen in einer Führungsschiene eines Frachtraumes. Obere Führungskanten der Führungsschiene sind mit Rastaussparungen versehen, in die die entsprechende Gegenstücke des längs der Führungsschiene verfahrbaren Spannelementes eingerastet werden können.

Aufgabe der Erfindung ist es, eine Laderaumfunktionsvorrichtung der eingangs genannten Art zu schaffen, die eine verbesserte Reinigung des wenigstens einen Führungsprofiles innerhalb des Laderaumes ermöglicht.

Diese Aufgabe wird dadurch gelöst, dass das Führungsprofil ein über seine gesamte Breite nach oben offenes Querschnittsprofil aufweist, und dass das Führungsprofil in seinem Bodenbereich mit Sicherungsmitteln zum - in Hochrichtung - formschlüssigen Rückhalt des wenigstens einen Funktionselementes versehen ist. Dadurch, dass das Führungsprofil nach Art einer Rinne zum Laderaum hin vollkommen offen ist, ist das Führungsprofil für eine manuelle Reinigung äußerst einfach zugänglich. Hinterschnitte, die schlecht zu reinigen wären, werden vermieden. Dadurch, dass bodenseitig Sicherungsmittel vorgesehen sind, die das wenigstens eine Funktionselement in Hochrichtung des Führungsprofiles zurückhalten, wird ein Lösen des Funktionselementes aus dem Führungsprofil heraus vermieden. Vorzugsweise ist das wenigstens eine Führungsprofil in einem Laderaumboden eines Kraftfahrzeugs eingebettet. Das Einbetten des Führungsprofiles bedeutet, dass es mit seiner Oberkante bündig mit der entsprechenden Begrenzungsfläche, vorzugsweise dem Laderaumboden, abschließt, so dass das Führungsprofil nicht über die entsprechende Begrenzungsfläche zum Inneren des Laderaumes hin abragt. In gleicher Weise kann das Führungsprofil in anderen Begrenzungsflächen des Laderaumes, wie insbesondere den Seitenwandungen, einer Rückenlehnenanordnung einer Fondsitzbank, an der Innenseite einer Heckklappe oder in einem Dachbereich angeordnet sein.

Bei einer erfindungsgemäßen Laderaumfunktionsvorrichtung für ein Kraftfahrzeug mit wenigstens einem längserstreckten Führungsprofil, das in einer Begrenzungsfläche des Laderaumes derart eingebettet ist, dass eine Oberseite des Führungsprofils zumindest im Wesentlichen bündig mit der Begrenzungsfläche abschließt, und an dem wenigstens ein Funktionselement längsverlagerbar und in unterschiedlichen Positionen blockierbar angeordnet ist, hat es sich als besonders vorteilhaft erwiesen, dass das Funktionselement in dem Führungsprofil derart aufgenommen ist, dass es in einer Ruheposition nicht über die Oberseite des Führungsprofils hinausragt.

In Ausgestaltung der Erfindung sind in Längsrichtung des Führungsprofiles wirksame Blockiermittel vorgesehen. Dadurch ist gewährleistet, dass das wenigstens eine Funktionselement längs des Führungsprofiles verschoben und in beliebigen Positionen blockiert werden kann.

In weiterer Ausgestaltung der Erfindung sind die Blockiermittel als formschlüssig wirksame Rastmittel ausgeführt, die mehrere, über die Länge des Führungsprofiles verteilt angeordnete Rastprofilierungen und hierzu korrespondierende Rastelemente an dem wenigstens einen Funktionselement aufweisen. Die formschlüssig wirksamen Rastmittel ermöglichen eine besonders gute Positionssicherung für das wenigstens eine Funktionselement.

In weiterer Ausgestaltung der Erfindung ist das wenigstens eine Funktionselement zumindest abschnittsweise - in Hochrichtung des Führungsprofils gesehen - begrenzt beweglich angeordnet, wobei die Blockiermittel derart auf die begrenzte Beweglichkeit abgestimmt sind, dass eine nach unten bewegte Position des Funktionselementes einer Freigabestellung und eine nach oben bewegte Stellung einer Blockierstellung des Funktionselementes entsprechen. Vorzugsweise ist entweder das gesamte Funktionselement oder lediglich ein Abschnitt des Funktionselementes, der relativ zu dem übrigen Funktionselement beweglich gelagert ist, höhenverlagerbar positioniert. Dadurch, dass das Funktionselement in der oberen Stellung blockiert, in der unteren Position jedoch freigegeben ist, ist es möglich, das Funktionselement in einfacher Weise von Hand nach unten zu drücken und in die gewünschte Position zu verschieben.

In weiterer Ausgestaltung der Erfindung weisen die Sicherungsmittel ein von dem Bodenbereich des Führungsprofiles aus nach oben abragendes, längserstrecktes Sicherungsprofil auf, dessen Querschnitt wenigstens eine in Längsrichtung verlaufende Einschnürung umfasst. Vorzugsweise ist das Sicherungsprofil mittig im Bodenbereich des Führungsprofiles angeordnet und erstreckt sich längs der Mittelachse des Führungsprofiles zumindest nahezu über dessen gesamte Länge. Das Sicherungsprofil kann einstückig mit dem Führungsprofil ausgebildet sein. Dabei kann das Führungsprofil entweder als Blechbiegeteil durch Kaltumformung oder als Gussteil durch Gießen oder als Schmiedeteil durch Schmieden hergestellt sein.

In weiterer Ausgestaltung der Erfindung weist das Funktionselement eine Aufnahmenut auf, die in ihrem Querschnitt auf den Querschnitt des Sicherungsprofiles derart abgestimmt ist, dass das Funktionselement längs des Sicherungsprofiles verschiebbar und in Hochrichtung des Führungsprofiles auf dem Sicherungsprofil gesichert ist. Dabei kann die Aufnahmenut entweder in einem Grundkörper des Funktionselementes oder in dem zu dem Grundkörper des Funktionselementes relativbeweglich gelagerten Abschnitt des Funktionselementes integriert sein.

In weiterer Ausgestaltung der Erfindung sind die Rastprofilierungen an dem Sicherungsprofil und die korrespondierenen Rastelemente in der Aufnahmenut des Funktionselementes vorgesehen. Das Sicherungsprofil übernimmt somit eine Doppelfunktion, da es das wenigstens eine Funktionselement sowohl gegen ein Lösen zu der offenen Seite des Führungsprofiles hin sichert als auch eine Blockiermöglichkeit des Funktionselementes in Längsrichtung des Führungsprofiles schafft.

In weiterer Ausgestaltung der Erfindung sind die Blockiermittel als kraftschlüssig wirksame Bremsmittel ausgeführt. Diese Alternaive ermöglicht eine Blockierung durch Reibschluss, insbesondere durch eine Verklemmung oder Verkantung des Funktionselementes oder eines Abschnittes dieses Funktionselementes relativ zu dem Sicherungsprofil. Unter einer Verklemmung wird vorliegend eine im Wesentlichen rechtwinklige Relativbewegung des Funktionselementes oder eines entsprechenden Abschnittes des Funktionselementes zu dem Sicherungsprofil verstanden. Mit einer Verkantung ist ein Schrägstellen des Funktionselementes oder eines Abschnittes des Funktionselementes gemeint.

In weiterer Ausgestaltung der Erfindung weist das Funktionselement wenigstens ein federbelastetes, in Hochrichtung des Führungsprofils beweglich gelagertes Stützelement auf, das das Funktionselement durch Federkraft in seine Blockierstellung drückt. Als federbelastetes Stützelement kann insbesondere auch eine entsprechende Schraubendruckfeder selbst dienen. Alternativ ist ein separates Stützelement vorgesehen, das durch eine Federeinheit, insbesondere einer Schraubendruckfeder, in entsprechender Weise belastet ist.

In weiterer Ausgestaltung der Erfindung weist das Funktionselement einen Blockierabschnitt auf, der innerhalb des Funktionselementes in Hochrichtung des Führungsprofils begrenzt beweglich gelagert ist, und der die Aufnahmenut für die Führung auf dem Sicherungsprofil umfasst. Der Blockierabschnitt stellt vorzugsweise ein separates Bauteil dar, das begrenzt beweglich in dem Funktionselement gehalten ist. Vorzugsweise ist der Blockierabschnitt federbelastet, insbesondere durch eine entsprechende Schraubendruckfeder. Der Blockierabschnitt kann kraft- oder formschlüssig wirksam sein.

In weiterer Ausgestaltung der Erfindung umfasst der Blockierabschnitt die Rastelemente des Führungsprofils, und der Blockierabschnitt ist in Hochrichtung druckfederbelastet. Die Freigabe- und Blockierfunktionen werden somit in einfacher Weise durch den Blockierabschnitt erzielt.

In weiterer Ausgestaltung der Erfindung weisen der Blockierabschnitt oder das Funktionselement oberseitig eine Betätigungsfläche auf, über die manuell Druck auf den Blockierabschnitt oder das Funktionselement ausübbar ist. Dadurch wird eine manuelle Betätigung, d.h. ein manuelles Verschieben des Funktionselementes, erleichtert.

In weiterer Ausgestaltung der Erfindung weist das Funktionselement eine Höhe auf, die geringer ist als die lichte Höhe des Führungsprofils. Dadurch ist gewährleistet, dass das Funktionselement trotz seiner Relativbeweglichkeit in Hochrichtung des Führungsprofiles in keiner seiner Endstellungen über die entsprechende Begrenzungsfläche des Laderaumes hinausragt.

In weiterer Ausgestaltung der Erfindung schließt das Funktionselement im Wesentlichen bündig mit einer Oberseite des Führungsprofiles ab, und der Blockierabschnitt ist innerhalb des Funktionselementes in einer Aufnahme höhenverlagerbar geführt, deren Höhe größer ist als die Höhe des Blockierabschnittes. Falls das Funktionselement mit einem relativbeweglichen Blockierabschnitt versehen ist, ist durch diese Ausgestaltung gewährleistet, dass auch der Blockierabschnitt nicht über die Oberkante des Funktionsprofiles hinaus abragt.

Der Blockierabschnitt kann - je nachdem, ob eine formschlüssig wirksame oder eine kraftschlüssig wirksame Blockierung erzielbar ist - als Rastabschnitt oder als Bremsabschnitt dienen.

In weiterer Ausgestaltung der Erfindung weist das Führungsprofil wenigstens einen Einsatz- und Entnahmebereich auf, an den das Sicherungsprofil stirnseitig anschließt, um ein Einsetzen und Entnehmen wenigstens eines Funktionselementes zu ermöglichen. Im Einsatz- und Entnahmebereich des Führungsprofiles ist somit kein Sicherungsprofil vorgesehen. Dadurch ist es möglich, dass ein entsprechendes Funktionselement in diesem Bereich von oben her in das Führungsprofil eingesetzt oder nach oben aus diesem entnommen werden kann. Der Ausdruck "oben" schließt im Sinne dieser Offenbarung auch das Einsetzen oder Entnehmen bei Führungsprofilen ein, die in seitlichen oder dachseitigen Begrenzungsflächen untergebracht sind. Der Begriff "oben" bedeutet somit soviel wie "zum Inneren des Laderaumes hin".

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Die Erfindung umfasst auch beliebige Kombinationen von Teil- und Einzelmerkmalen, die in der Beschreibung und den Ansprüchen sowie den Zeichnungen für sich gesehen offenbart, in diesen Kombinationen aber nicht ausdrücklich dargestellt sind.
- Fig. 1: zeigt in schematischer, perspektivischer Darstellung einen La- deraum eines Kraftfahrzeugs, dessen Laderaumboden eine Ausführungsform einer erfindungsgemäßen Laderaumfunk- tionsvorrichtung zugeordnet ist,
- Fig. 2: in perspektivischer Darstellung die Laderaumfunktionsvorrich- tung nach Fig. 1 in einer ausschnittsweisen, perspektivischen und vergrößerten Darstellung,
- Fig. 3: in isometrischer Darstellung die Laderaumfunktionsvorrichtung nach Fig. 2,
- Fig. 4: in vergrößerter Bilddarstellung die Laderaumfunktionsvorrich- tung nach Fig. 2,
- Fig. 5: in einer Schnittdarstellung ähnlich Fig. 4 eine weitere Ausfüh- rungsform einer erfindungsgemäßen Laderaumfunktionsvor- richtung in einer oberen Blockierstellung,
- Fig. 6: die Laderaumfunktionsvorrichtung nach Fig. 5 in einer unteren Freigabestellung,
- Fig. 7: eine weitere Ausführungsform einer erfindungsgemäßen Lade- raumfunktionsvorrichtung in einer Blockierstellung und
- Fig. 8: die Laderaumfunktionsvorrichtung nach Fig. 7 in ihrer Freiga- bestellung.

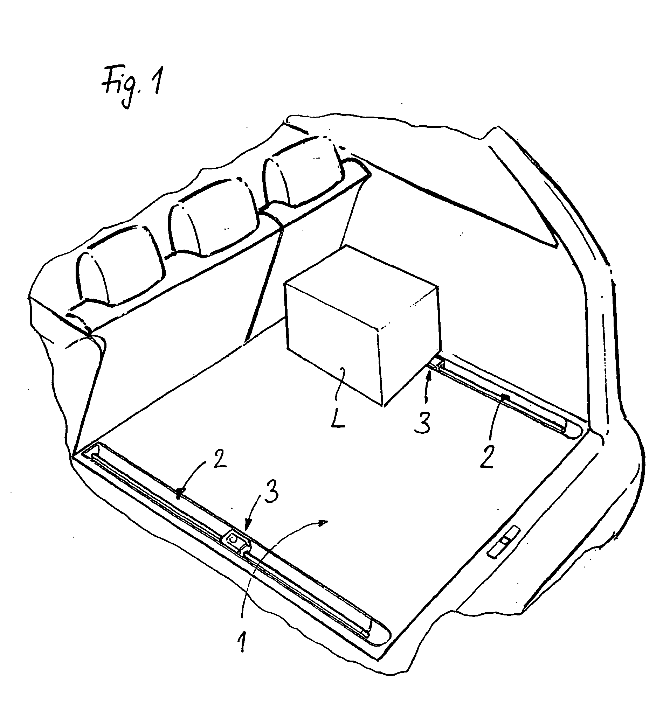

Ein Laderaum eines Kraftfahrzeugs in Form eines Personenkraftwagens weist gemäß Fig. 1 einen Laderaumboden 1 auf, der zu den Seiten hin durch Laderaumbegrenzungsflächen in Form von Laderaumseitenwandungen und nach vorne hin durch eine Laderaumbegrenzungsfläche in Form einer Rückwand einer Fondsitzanordnung begrenzt ist. Der Laderaumboden 1 ist eben ausgeführt. An seinen gegenüberliegenden Längsseiten weist der Laderaumboden 1 zwei in Fahrzeuglängsrichtung über nahezu die gesamte Länge des Laderaumbodens 1 erstreckte Führungsprofile 2 auf, in denen jeweils ein Funktionselement 3 integriert ist. Die Führungsprofile 2 sind in entsprechende Vertiefungen des Laderaumbodens derart eingebettet, dass ihre Oberseiten bündig mit der Oberfläche des Laderaumbodens 1 abschließen. Die Führungsprofile 2 sind als im Wesentlichen rinnenförmige, nach oben offene Profile gestaltet, wie nachfolgend näher ausgeführt wird. Die Funktionselemente 3 sind in ihrer Ruheposition, in denen sie zwar im jeweiligen Führungsprofil 2 gehalten sind, aber keine eigenständige Halte-, Sicherungs- oder ähnliche Funktion innehaben, derart in dem jeweiligen Führungsprofil 2 aufgenommen, dass ihre Oberseite nicht über die ebene Oberfläche des Laderaumbodens 1 hinausragt. Dies ist verdeutlicht durch ein Ladegut L, das auf dem Laderaumboden 1 aufliegt und kistenförmig ausgeführt ist. Es ist erkennbar, dass das Ladegut L auch im Bereich des Funktionselementes 3 flächig auf dem Laderaumboden 1 aufliegen kann.

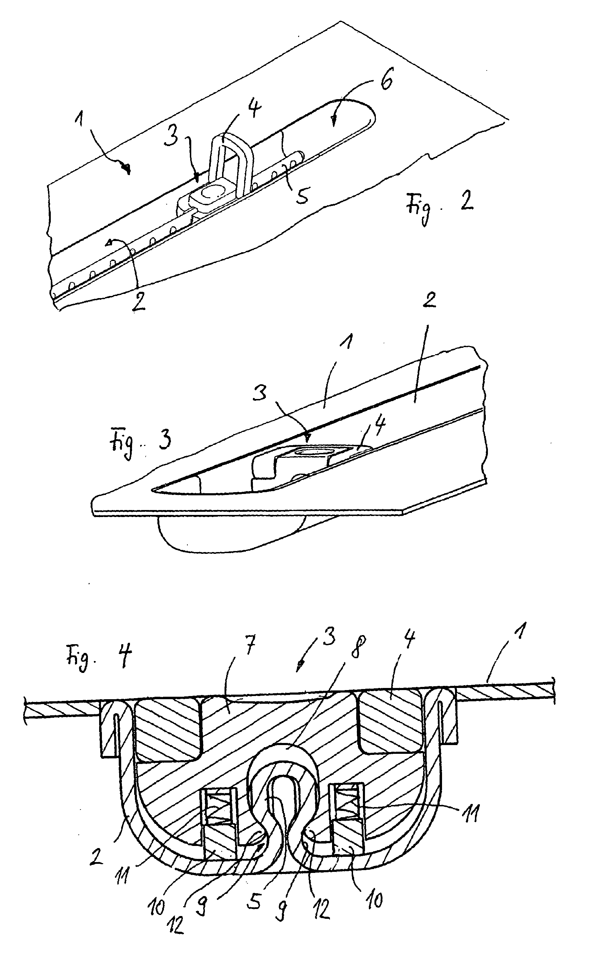

Alle nachfolgend näher beschriebenen Ausführungsformen weisen eine oder mehrere Führungsprofile 2, 2a, 2b auf, die gemäß Fig. 2 in dem Boden 1 eines Laderaumes eines Kraftfahrzeugs integriert sind. Jedes Führungsprofil 2, 2a, 2b ist rinnenartig ausgeführt und in nicht dargestellter Weise mit einer Karosserietragstruktur des Kraftfahrzeugs lastaufnehmend verbunden, um zu verhindern, dass das jeweilige Führungsprofil 2, 2a, 2b aus dem Boden 1 bei entsprechenden Zugkräften ausreißt oder in anderer Weise beschädigt wird.

Alle Führungsprofile 2, 2a, 2b weisen ein einstückig in einem Bodenbereich der Führungsprofile 2 integriertes Sicherungsprofil 5 auf, das spiegelsymmetrisch zu einer Mittellängsebene des Führungsprofiles 2, 2a, 2b von dem Bodenbereich zu einer offenen Seite des Führungsprofiles 2 hin und damit in das Führungsprofil 2 hinein abragt. Das Sicherungsprofil 5, 5a, 5b erstreckt sich über nahezu die gesamte Länge des jeweiligen Führungsprofiles 2, 2a, 2b. Bei jedem Führungsprofil 2, 2a, 2b ist gemäß Fig. 2 wenigstens ein Einsetz- und Entnahmebereich 6 vorgesehen, vor dem das entsprechende Sicherungsprofil 5 mit einem entsprechend offen zugänglichen Stirnende endet. In dem Einsetz- und Entnahmebereich 6 jedes Führungsprofiles 2, 2a, 2b weist das Führungsprofil somit eine Rinnenkontur auf, ohne dass der Bodenbereich durch das Sicherungsprofil unterbrochen ist. In diesem Einsetz- und Entnahmebereich 6 kann von oben her ein entsprechendes Funktionselement 3, 3a, 3b eingesetzt oder nach oben aus diesem entnommen werden. Nach dem Einsetzen im Einsetz- oder Entnahmebereich 6 kann das entsprechende Funktionselement 3, 3a, 3b in einfacher Weise in Längsrichtung des Führungsprofiles auf das Stirnende des Sicherungsprofiles 5, 5a, 5b aufgeschoben werden, wodurch es zwangsläufig gegen ein Entfernen nach oben gesichert ist, wie nachfolgend näher beschrieben werden wird.

Bei allen Ausführungsformen weist das Funktionselement 3, 3a, 3b einen schwenkbeweglich gelagerten, ösenartigen Haltebügel 4 auf, an dem ein entsprechendes Verzurrelement wie ein Verzurrgurt oder ähnliches oder auch ein Einhängehaken angreifen kann.

Bei der Ausführungsform nach den Fig. 2 bis 4 ist das Führungsprofil 2 als Blechbiegeteil ausgeführt, und weist in einem Querschnitt rinnenartige Form auf. Das Sicherungsprofil 5 ist einstückig aus dem Bodenbereich des Führungsprofiles 2 ausgeformt, wobei es einen im Querschnitt schlaufenartigen Falz bildet. Das Sicherungsprofil 5 weist einen breiten Kopfbereich auf, der zum Bodenbereich hin mittels links- und rechtsseitiger Einschnürungen 9 in das Führungsprofil 2 übergeht. Das Funktionselement 3 weist einen Grundkörper 7 auf, an dem der Haltebügel 4 schwenkbeweglich gelagert ist. Der Grundkörper 7 ist mit einer nach unten offenen Aufnahmenut 8 versehen, die zu ihrem offenen Ende hin durch entsprechende Stegbereiche 12 eingeschnürt ist. Die Aufnahmenut 8 und die Stegabschnitte 12 bzw. die Einschnürungen 9 sind derart dimensioniert, dass der Grundkörper 7 und damit das Funktionselement 3 innerhalb des Führungsprofiles 2 begrenzt höhenverlagerbar sind. Der Grundkörper 7 weist im Bereich seiner Unterseite zwei nach unten offene Aussparungen auf, die die Aufnahmenut 8 beidseitig flankieren. In den Aussparungen ist jeweils ein Stützelement 10 in Hochrichtung verlagerbar angeordnet. Jedem Stützelement 10 ist eine Federeinheit 11 zugeordnet, die sich am Grundkörper 7 einerseits und am jeweiligen Stützelement 10 andererseits abstützen. Das jeweilige Stützelement 10 stützt sich an dem Bodenbereich des Führungsprofiles 2 ab. Hierdurch wird für das Funktionselement 3 eine Blockierfunktion in Längsrichtung der Führungsprofile 2 erzielt. Denn die Druckfedereinheiten 11 drücken die Stützelemente 10 gegen den Bodenbereich, wodurch zwangsläufig der Grundkörper 7 nach oben gedrückt wird. Dadurch geraten die Stegabschnitte 12 am offenen Endbereich der Aufnahmenut 8 an den oberen, sich erweiternden Bereichen der Einschnürungen 9 zur Anlage und werden durch den breiteren Kopf des Sicherungsprofiles 5 in Hochrichtung formschlüssig zurückgehalten. Dadurch ergibt sich zwischen dem Grundkörper 7 und dem Sicherungsprofil 5 ein Reibschluss in Längsrichtung des Führungsprofiles 2, der eine Blockierung des Funktionselementes 3 bewirkt. Durch eine einfache manuelle Druckbewegung auf die Oberfläche des Grundkörpers 7 kann diese Verklemmung gelöst werden, wodurch das Funktionselement 3 von Hand in Längsrichtung des Führungsprofiles 2 in die gewünschte Position verschoben werden kann.

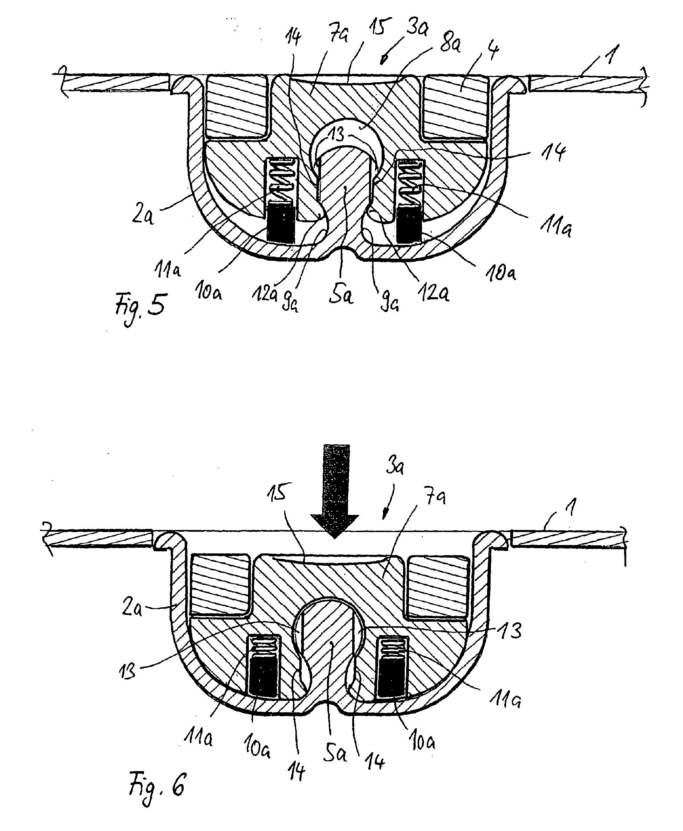

Die Ausführungsform nach den Fig. 5 und 6 entspricht im Wesentlichen der Ausführungsform nach den Fig. 2 bis 4, so dass nachfolgend lediglich auf die Unterschiede zu der Ausführungsform nach den Fig. 2 bis 4 eingegangen wird. Funktionsgleiche Teile und Abschnitte sind mit den gleichen Bezugszeichen wie bei der Ausführungsform nach den Fig. 2 bis 4, jedoch unter Hinzufügung des Buchstabens "a" versehen. Bei der Ausführungsform nach den Fig. 5 und 6 ist das Führungsprofil 2a als metallisches Strangpressprofil ausgeführt, wobei das Sicherungsprofil 5a im Bodenbereich des Führungsprofiles 2a ein einstückiger Teil des Strangpressprofiles ist und stegartig nach oben abragt. Auch das Sicherungsprofil 5a ist in seinem Kopfbereich verdickt, so dass sich beidseitig des Sicherungsprofiles 5a zu dem Bodenbereich hin Einschnürungen 9a ergeben, die über die Gesamtlänge des Sicherungsprofiles 5a - wie auch bei der Ausführungsform nach den Fig. 2 bis 4 - erstreckt sind. Wesentlicher Unterschied bei der Ausführungsform nach den Fig. 5 und 6 ist es, dass das Funktionselement 3a in Längsrichtung formschlüssig blockierbar ist. Hierzu weist das Sicherungsprofil 5a in seinem Kopfbereich auf den gegenüberliegenden Seiten jeweils eine Reihe von über die Länge des Sicherungsprofiles 5a gleichmäßig verteilten Rastprofilierungen 13 auf. Diesen Rastprofilierungen 13 sind innerhalb der Aufnahmenut 8a korrespondierende, steg- oder zahnförmig ausgeführte Rastelemente 14 zugeordnet, die - in Längsrichtung des Führungsprofiles 2a gesehen - formschlüssig in die Rastprofilierungen 13 des Sicherungsprofiles 5a eingreifen. Die Rastprofilierungen 13 sind derart in Hochrichtung ausgerichtet, dass die Rastelemente 14 von unten her in die Rastaussparungen 13 eintauchen können. Der Grundkörper 7a des Funktionselementes 3a ist analog zu der Ausführungsform nach Fig. 4 mit Stützelementen 10a versehen, die durch jeweils eine Druckfedereinheit 11a gegen den Bodenbereich des Führungsprofiles 1a gedrückt werden. Dadurch wird in analoger Weise der Grundkörper 7a nach oben gedrückt, wodurch zum einen entsprechend zu der Ausführungsform nach Fig. 4 die eingeschnürten Stegabschnitte 12a der Aufnahmenut 8a an den sich verbreiternden Bereichen der Einschnürungen 9a zur Anlage gelangen. Zum anderen tauchen gleichzeitig die in Hochrichtung erstreckten Rastelemente 14 in die korrespondierend ausgerichteten Rastprofilierungen 13 ein, so dass in Längsrichtung des Führungsprofiles 2a ein zusätzlicher Formschluss erzielt wird. Das Lösen des Funktionselementes 3a erfolgt in einfacher Weise analog zu der Ausführungsform nach Fig. 4, indem auf eine an der Oberseite des Grundkörpers 7a vorgesehene Griffmulde 15, die als Betätigungsfläche dient, ein manueller Druck ausgeübt wird. Hierdurch werden die Druckfedereinheiten 11a zusammengepresst, wodurch die Stützelemente 10a in die entsprechenden Aussparungen des Grundkörpers 7a eintauchen. Der Grundkörper 7a und damit das Funktionselement 3a wird dadurch in eine untere Freigabestellung gemäß Fig. 6 gedrückt. In dieser Freigabestellung sind die Rastelemente 14 aus den Rastprofilierungen 13 nach unten herausgeschoben, so dass in Längsrichtung des Führungsprofiles 2a kein Formschluss mehr gegeben ist. Da der Grundkörper 7a vorzugsweise ebenfalls aus Metall ausgeführt ist, ergeben sich in dem Führungsprofil 2a und dem Grundkörper 7a vergleichsweise geringe Reibwerte, so dass in dieser unteren Freigabestellung das Funktionselement 3a von Hand längs des Führungsprofiles 2a verschoben werden kann.

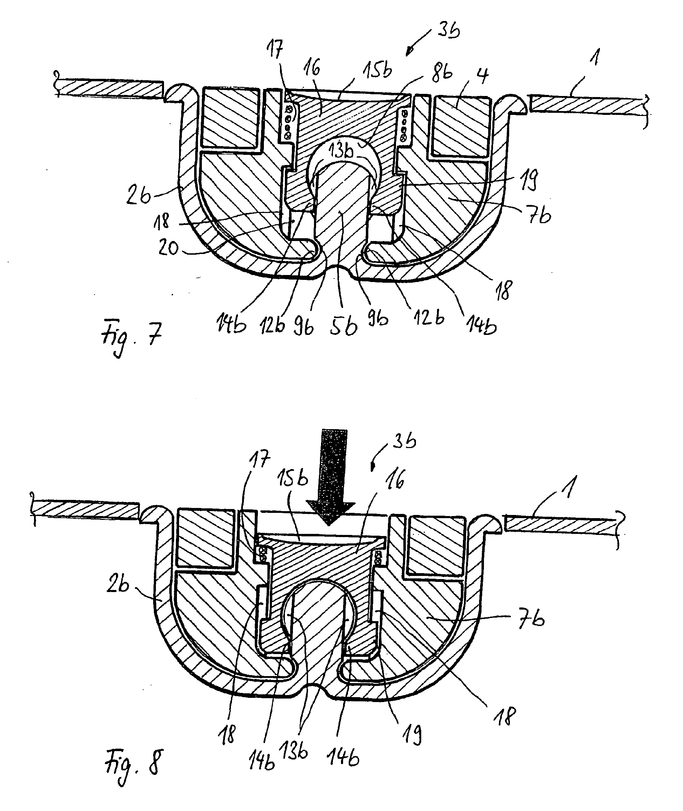

Die Ausführungsform nach den Fig. 7 und 8 entspricht vom grundsätzlichen Aufbau her der Ausführungsform nach den Fig. 5 und 6, so dass insoweit auf die Beschreibung zur Ausführung nach den Fig. 5 und 6 verwiesen wird. Funktionsgleiche Teile und Abschnitte sind mit gleichen Bezugszeichen unter Hinzufügung des Buchstabens "b" versehen. Wesentlicher Unterschied bei der Ausführungsform nach den Fig. 7 und 8 ist es, dass der Grundkörper 7b des Funktionselementes 3b innerhalb der Führungsprofiles 2b nicht höhenverlagerbar ist, sondern im Wesentlichen bündig mit der Oberkante des Führungsprofiles 2b abschließt, wie anhand der Fig. 7 und 8 erkennbar ist. Die Führungs- und Blockierfunktionen werden bei dieser Ausführungsform durch einen innerhalb des Grundkörpers 7b und damit innerhalb des Funktionselementes 3b in Hochrichtung des Führungsprofiles 2b beweglich gelagerten Blockierabschnitt 16 übernommen, der als separates Bauteil zu dem Grundkörper 7b gestaltet ist. Der Blockierabschnitt 16 ist innerhalb des Grundkörpers 7b schlittenartig begrenzt höhenverlagerbar. Hierzu weist der Blockierabschnitt 16 in Hochrichtung ausgerichtete Führungsabschnitte 19 auf, die in entsprechende Führungsnuten 18 innerhalb einer Aussparung 20 des Grundkörpers 7b eintauchen. Durch einen entsprechenden Anschlagbund ist die Höhenverlagerbarkeit des Blockierabschnittes 16 innerhalb des Grundkörpers 7b begrenzt. Der Blockierabschnitt 16 wird durch eine Druckfederanordnung 17 in unbelasteter Position in seiner oberen Stellung gehalten und diese obere Stellung stellt eine Blockierstellung für das Funktionselement 3b dar, wie nachfolgend näher ausgeführt wird.

Der Blockierabschnitt 16 ist mit einer Aufnahmenut 8b versehen, die einen kreisartigen Querschnitt hat, der auf den Querschnitt des Kopfbereiches des Sicherungsprofiles 5b abgestimmt ist. Das Sicherungsprofil 5b ist analog der Ausführungsform nach den Fig. 5 und 6 mit Rastprofilierungen 13b in seinem Kopfbereich versehen. Korrespondierend dazu weist der Blockierabschnitt 16 in einem unteren Bereich der Aufnahmenut 8b Rastelemente 14b auf, die in Hochrichtung in die Rastprofilierungen 13b eintauchen oder aus diesen heraustreten können. Der Grundkörper 7b ist zusätzlich unterhalb der Aussparung 20 mit als Einschnürung dienenden Stegabschnitten 12b versehen, die in korrespondierend gestaltete Einschnürungen 9b des Sicherungsprofiles 5b eingreifen. Die Rückhaltefunktion gegen ein Lösen des Grundkörpers 7b und damit des Funktionselementes 3b aus dem Führungsprofil 2b nach oben übernehmen somit die Stegabschnitte 12b und die entsprechenden Einschnürungen 9b des Sicherungsprofiles 5b. Die Blockier- und Freigabefunktion des Funktionselementes in Längsrichtung des Führungsprofiles 2b hingegen übernimmt der begrenzt höhenverlagerbare Blockierabschnitt 16. Eine entsprechende Druckfederanordnung 17 hält des Blockierabschnitt 16 in seiner oberen, unbelasteten Blockierstellung. Durch einfache manuelle Druckbewegung gemäß Fig. 8 wird der Blockierabschnitt 16 nach unten gedrückt, wodurch die Rastelemente 14b sich nach unten aus den Rastprofilierungen 13b heraus entfernen und das Funktionselement für eine Verschiebebewegung in Längsrichtung des Führungsprofiles 2b freigeben.

## Patentansprüche

1. Laderaumfunktionsvorrichtung für ein Kraftfahrzeug mit wenigstens einem längserstreckten Führungsprofil (2,2a,2b), das in einer Begrenzungsfläche des Laderaumes, insbesondere in einer Laderaumbodenfläche, derart eingebettet ist, dass eine Oberseite des Führungsprofils zumindest im Wesentlichen bündig mit der Begrenzungsfläche (1) abschließt, und an dem wenigstens ein Funktionselement (3) langsverlagerbar und in unterschiedlichen Positionen blockierbar angeordnet ist, **dadurch gekennzeichnet, dass** das Führungsprofil (2, 2a, 2b) ein über seine gesamte Breite nach oben offenes Querschnittsprofil aufweist, und dass das Führungsprofil (2, 2a, 2b) in seinem Bodenbereich mit Sicherungsmitteln (5, 5a, 5b) zum - in Hochrichtung des Führungsprofiles (2, 2a, 2b) - formschlüssigen Rückhalten des wenigstens einen Funktionselementes (3, 3a, 3b) versehen ist.

2. Laderaumfunktionsvorrichtung nach Anspruch 1, **dadurch gekennzeichnet, dass** das Funktionselement (3, 3a, 3b) in dem Führungsprofil (2, 2a, 2b) derart aufgenommen ist, dass es in einer Ruheposition nicht über die Oberseite des Führungsprofiles (2, 2a, 2b) hinausragt.

3. Laderaumfunktionsvorrichtung nach Anspruch 1, **dadurch gekennzeichnet, dass** in Längsrichtung des Führungsprofiles (2, 2a, 2b) wirksame Blockiermittel (9, 12; 13, 14; 13b, 14b) vorgesehen sind.

4. Laderaumfunktionsvorrichtung nach Anspruch 3, **dadurch gekennzeichnet, dass** die Blockiermittel als formschlüssig wirksame Rastmittel (13, 14; 13b, 14b) ausgeführt sind, die mehrere, über die Länge des Führungsprofiles (2a, 2b) verteilt angeordnete Rastprofilierungen (13, 13b) und hierzu korrespondierende Rastelemente (14, 14b) an dem wenigstens einen Funktionselement aufweisen.

5. Laderaumfunktionsvorrichtung nach einem der vorhergehenden Ansprüche, **dadurch gekennzeichnet, dass** das wenigstens eine Funktionselement (3, 3a, 3b) zumindest abschnittsweise - in Hochrichtung des Führungsprofiles gesehen - begrenzt beweglich angeordnet ist, wobei die Blockiermittel derart auf die begrenzte Beweglichkeit abgestimmt sind, dass eine nach unten bewegte Position des Funktionselementes (3, 3a, 3b) einer Freigabestellung und eine nach oben bewegte Stellung einer Blockierstellung des Funktionselementes (3, 3a, 3b) entsprechen.

6. Laderaumfunktionsvorrichtung nach Anspruch 1, **dadurch gekennzeichnet, dass** die Sicherungsmittel ein von dem Bodenbereich des Führungsprofiles (2, 2a, 2b) aus nach oben abragendes, längserstrecktes Sicherungsprofil (5, 5a, 5b) aufweisen, dessen Querschnitt wenigstens eine in Längsrichtung verlaufende Einschnürung (9, 9a, 9b) umfasst.

7. Laderaumfunktionsvorrichtung nach Anspruch 5, **dadurch gekennzeichnet, dass** das Funktionselement (3, 3a, 3b) eine Aufnahmenut (8, 8a, 8b aufweist, die in ihrem Querschnitt auf den Querschnitt des Sicherungsprofiles (5, 5a, 5b) derart abgestimmt ist, dass das Funktionselement (3, 3a, 3b) längs des Sicherungsprofiles verschiebbar und/oder in Hochrichtung des Führungsprofiles (2, 2a, 2b) auf dem Sicherungsprofil (5, 5a, 5b) gesichert ist.

8. Laderaumfunktionsvorrichtung nach Anspruch 4, **dadurch gekennzeichnet, dass** die Rastprofilierungen (13, 13b) an dem Sicherungsprofil (5a, 5b) und die korrespondierenden Rastelemente (14, 14b) in der Aufnahmenut (8a, 8b) des Funktionselementes vorgesehen sind.

9. Laderaumfunktionsvorrichtung nach Anspruch 3, **dadurch gekennzeichnet, dass** die Blockiermittel als kraftschlüssig wirksame Bremsmittel (9, 12) ausgeführt sind.

10. Laderaumfunktionsvorrichtung nach wenigstens einem der vorhergehenden Ansprüche, **dadurch gekennzeichnet, dass** das Funktionselement (3, 3a) wenigstens ein federbelastetes, in Hochrichtung des Führungsprofiles (2, 2a) beweglich gelagertes Stützelement (10, 10a) aufweist, das das Funktionselement (3, 3a) durch Federkraft in seine Blockierstellung drückt.

11. Laderaumfunktionsvorrichtung nach wenigstens einem der vorhergehenden Ansprüche, **dadurch gekennzeichnet, dass** das Funktionselement (3b) einen Blockierabschnitt (16) aufweist, der innerhalb des Funktionselementes (3b) in Hochrichtung des Führungsprofiles (2b) begrenzt beweglich gelagert ist, und der die Aufnahmenut (8b) für die Führung auf dem Sicherungsprofil (5b) umfasst.

12. Laderaumfunktionsvorrichtung nach Anspruch 10, **dadurch gekennzeichnet, dass** der Blockierabschnitt die Rastelemente (14b) des Funktionselementes umfasst, und dass der Blockierabschnitt in Hochrichtung druckfederbelastet ist.

13. Laderaumfunktionsvorrichtung nach Anspruch 10 oder 11, **dadurch gekennzeichnet, dass** der Blockierabschnitt (16) oder das Funktionselement (3b) oberseitig eine Betätigungsfläche (15, 15b) aufweisen, über die manuell Druck auf den Blockierabschnitt oder das Funktionselement ausübbar ist.

14. Laderaumfunktionsvorrichtung nach Anspruch 2, **dadurch gekennzeichnet, dass** das Funktionselement (3, 3a) eine Höhe aufweist, die geringer ist als die lichte Höhe des Führungsprofiles (2, 2a).

15. Laderaumfunktionsvorrichtung nach wenigstens einem der vorhergehenden Ansprüche, **dadurch gekennzeichnet, dass** das Funktionselement (3b) im Wesentlichen bündig mit einer Oberseite des Führungsprofiles (2b) abschließt, und dass der Blockierabschnitt (16) innerhalb des Funktionselementes (3b) in einer Aufnahme (20) höhenverlagerbar geführt ist, deren Höhe größer ist als die Höhe des Blockierabschnittes (16).

16. Laderaumfunktionsvorrichtung nach wenigstens einem der vorhergehenden Ansprüche, **dadurch gekennzeichnet, dass** das Führungsprofil (2, 2a, 2b) wenigstens einen Einsatz- und Entnahmebereich (6) aufweist, an den das Sicherungsprofil (5, 5a, 5b) stirnseitig anschließt, um ein Einsetzen und Entnehmen wenigstens eines Funktionselementes (3., 3a, 3b) zu ermöglichen.

## Claims

1. Storage space functional device for a motor vehicle having at least one longitudinally extending guide profile (2, 2a, 2b) embedded in a limiting surface of the storage space, in particular in a storage space floor surface, such that an upper side of the guide profile ends at least substantially flush with the limiting surface (1) and at which profile at least one function element (3) is arranged for longitudinal displacement and locking in different positions, **characterized in that** the guide profile (2, 2a, 2b) has a cross-section profile open to the top over its entire width and **in that** the guide profile (2, 2a, 2b) is provided in its bottom area with securing means (5, 5a, 5b) for positive retention of the at least one function element (3, 3a, 3b) in the vertical direction of the guide profile (2, 2a, 2b).

2. Storage space functional device according to Claim 1, **characterized in that** the function element (3, 3a, 3b) is held inside the guide profile (2, 2a, 2b) such that in a rest position it does not protrude beyond the top of the guide profile (2, 2a, 2b).

3. Storage space functional device according to Claim 1, **characterized in that** effective locking means (9. 12; 13, 14; 13b, 14b) are provided in the longitudinal direction of the guide profile (2, 2a, 2b).

4. Storage space functional device according to Claim 3, **characterized in that** the locking means are designed as positively effective engaging means (13, 14; 13b, 14b) having several engaging sections (13, 13b) arranged distributed over the length of the guide profile (2a, 2b) and engaging elements (14, 14b) corresponding thereto on the at least one function element.

5. Storage space functional device according to one of the preceding claims, **characterized in that** the at least one function element (3, 3a, 3b) is arranged at least in some sections - when seen in the vertical direction of the guide profile - for limited movement, where the locking means are adjusted to the limited movability such that a position of the function element (3, 3a, 3b) moved downwards corresponds to a release position and a position moved upwards to a locking position of the function element (3, 3a, 3b).

6. Storage space functional device according to Claim 1, **characterized in that** the securing means have a longitudinally extending securing profile (5, 5a, 5b) protruding upwards from the floor area of the guide profile (2, 2a, 2b) and whose cross-section encloses at least one constriction (9, 9a, 9b) running in the longitudinal direction.

7. Storage space functional device according to Claim 5, **characterized in that** the function element (3, 3a, 3b) has a holding groove (8, 8a, 8b) which is adjusted in its cross-section to the cross-section of the securing profile (5, 5a, 5b) such that the function element (3, 3a, 3b) is movable along the securing profile and/or secured on the securing profile (5, 5a, 5b) in the vertical direction of the guide profile (2, 2a, 2b).

8. Storage space functional device according to Claim 4, **characterized in that** the engaging profiles (13, 13b) are provided on the securing profile (5a, 5b) and the corresponding engaging elements (14, 14b) inside the holding groove (8a, 8b) of the function element.

9. Storage space functional device according to Claim 3, **characterized in that** the locking means are designed as positively effective braking means (9, 12).

10. Storage space functional device according to at least one of the preceding claims, **characterized in that** the function element (3, 3a) has at least one spring-loaded support element (10, 10a) mounted for movement in the vertical direction of the guide profile (2, 2a) and pressing the function element (3, 3a) by spring force into its locking position.

11. Storage space functional device according to at least one of the preceding claims, **characterized in that** the function element (3b) has a locking section (16) mounted for limited movement in the vertical direction of the guide profile (2b) inside the function element (3b) and enclosing the holding groove (8b) for guidance on the securing profile (5b).

12. Storage space functional device according to Claim 10, **characterized in that** the locking section encloses the engaging elements (14b) of the function element and **in that** the locking section is compression-spring-loaded in the vertical direction.

13. Storage space functional device according to Claim 10 or 11, **characterized in that** the locking section (16) or the function element (3b) have on the upper side an actuating surface (15, 15b) via which pressure can be exerted manually onto the locking section or function element.

14. Storage space functional device according to Claim 2, **characterized in that** the function element (3, 3a) has a height which is less than the clear height of the guide profile (2, 2a).

15. Storage space functional device according to at least one of the preceding claims, **characterized in that** the function element (3b) ends at least substantially flush with an upper side of the guide profile (2b) and **in that** the locking section (16) inside the function element (3b) is guided for height adjustment inside a receptacle (20) whose height exceeds the height of the locking section (16).

16. Storage space functional device according to at least one of the preceding claims, **characterized in that** the guide profile (2, 2a, 2b) has at least one insertion and removal area (6) adjacent at the end to the securing profile (5, 5a, 5b) for enabling insertion and removal of at least one function element (3, 3a, 3b).

## Revendications

1. Dispositif fonctionnel de coffre pour un véhicule automobile avec au moins un profilé de guidage (2, 2a, 2b) qui s'étend longitudinalement et est implanté de telle manière dans une surface de délimitation du coffre, en particulier dans une surface de fond du coffre, qu'un côté supérieur du profilé de guidage se termine essentiellement en affleurement avec la surface de délimitation (1), et qui est disposé sur l'au moins un élément fonctionnel (3) de manière à pouvoir être déplacé longitudinalement et bloqué dans différentes positions, **caractérisé en ce que** le profilé de guidage (2, 2a, 2b) présente un profil de section ouvert vers le haut sur toute sa largeur, et que le profilé de guidage (2, 2a, 2b) est pourvu dans sa zone de fond de moyens d'arrêt (5, 5a, 5b) pour, dans le sens vertical du profilé de guidage (2, 2a, 2b), soutenir par complémentarité de forme l'au moins un élément fonctionnel (3, 3a, 3b).

2. Dispositif fonctionnel de coffre selon la revendication 1, **caractérisé en ce que** l'élément fonctionnel (3, 3a, 3b) est logé de telle manière dans le profilé de guidage (2, 2a, 2b) qu'il ne dépasse pas de la face supérieure du profilé de guidage (2, 2a, 2b) en position de repos.

3. Dispositif fonctionnel de coffre selon la revendication 1, **caractérisé en ce que** sont prévus des moyens de blocage (9, 12 ; 13, 14 ; 13b, 14b) agissant dans le sens longitudinal du profilé de guidage (2, 2a, 2b).

4. Dispositif fonctionnel de coffre selon la revendication 3, **caractérisé en ce que** les moyens de blocage sont conçus comme des moyens d'enclenchement (13, 14 ; 13b, 14b) fonctionnant par complémentarité de forme qui présentent plusieurs profils d'enclenchement (13, 13b) répartis tout au long du profilé de guidage (2a, 2b) et des éléments d'enclenchement (14, 14b) y correspondant sur l'au moins un élément fonctionnel.

5. Dispositif fonctionnel de coffre selon l'une des revendications précédentes, **caractérisé en ce que** l'au moins un élément fonctionnel (3, 3a, 3b) est, au moins en partie, et vu dans le sens de la hauteur du profilé de guidage, disposé de manière à être limité dans ses mouvements, sachant que les moyens de blocage sont ajustés de telle manière à la mobilité limitée qu'une position de déplacement vers le bas de l'élément fonctionnel (3, 3a, 3b) correspond à une position de libération et une position de déplacement vers le haut à une position de blocage de l'élément fonctionnel (3, 3a, 3b).

6. Dispositif fonctionnel de coffre selon la revendication 1, **caractérisé en ce que** les moyens d'arrêt présentent un profilé d'arrêt (5, 5a, 5b) dépassant vers le haut à partir de la zone de fond du profilé de guidage (2, 2a, 2b) et s'étendant longitudinalement, dont la coupe transversale comprend au moins un rétrécissement (9, 9a, 9b) s'étendant dans le sens longitudinal.

7. Dispositif fonctionnel de coffre selon la revendication 5, **caractérisé en ce que** l'élément fonctionnel (3, 3a, 3b) présente une rainure de réception (8, 8a, 8b) dont la coupe transversale est ajustée de telle manière à la coupe transversale du profilé d'arrêt (5, 5a, 5b) que l'élément fonctionnel (3, 3a, 3b) peut être déplacé le long du profilé d'arrêt et/ou est sécurisé dans le sens de la hauteur du profilé de guidage (2, 2a, 2b) sur le profilé d'arrêt (5, 5a, 5b).

8. Dispositif fonctionnel de coffre selon la revendication 4, **caractérisé en ce que** les profils d'engagement (13, 13b) sont prévus sur le profilé d'arrêt (5a, 5b) et les éléments d'enclenchement correspondants (14, 14b) dans la rainure de réception (8a, 8b) de l'élément fonctionnel.

9. Dispositif fonctionnel de coffre selon la revendication 3, **caractérisé en ce que** les moyens de blocage sont conçus sous forme de moyens de freinage (9, 12) agissant par liaison de force.

10. Dispositif fonctionnel de coffre selon au moins l'une des revendications précédentes, **caractérisé en ce que** l'élément fonctionnel (3, 3a) présente au moins un élément d'appui (10, 10a) commandé par ressort et logé de manière à pouvoir se déplacer dans le sens de la hauteur du profilé de guidage (2, 2a), lequel élément d'appui pousse l'élément fonctionnel (3, 3a) dans sa position de blocage sous l'effet de la force élastique.

11. Dispositif fonctionnel de coffre selon au moins l'une des revendications précédentes, **caractérisé en ce que** l'élément fonctionnel (3b) présente une section de blocage (16) qui est logée dans l'élément fonctionnel (3b) de manière à pouvoir se déplacer de façon limitée dans le sens de la hauteur du profilé de guidage (2b), et qui comprend la rainure de réception (8b) pour le guidage sur le profilé d'arrêt (5b).

12. Dispositif fonctionnel de coffre selon la revendication 10, **caractérisé en ce que** la section de blocage comprend les éléments d'enclenchement (14b) de l'élément fonctionnel, et que la section de blocage est soumise à un ressort de pression dans le sens de la hauteur.

13. Dispositif fonctionnel de coffre selon la revendication 10 ou 11, **caractérisé en ce que** la section de blocage (16) ou l'élément fonctionnel (3b) présente du côté supérieur une surface d'actionnement (15, 15b) par l'intermédiaire de laquelle une pression peut être exercée manuellement sur la section de blocage ou l'élément fonctionnel.

14. Dispositif fonctionnel de coffre selon la revendication 2, **caractérisé en ce que** l'élément fonctionnel (3, 3a) présente une hauteur inférieure à la hauteur libre du profilé de guidage (2, 2a).

15. Dispositif fonctionnel de coffre selon au moins l'une des revendications précédentes, **caractérisé en ce que** l'élément fonctionnel (3b) se termine essentiellement en affleurement avec une face supérieure du profilé de guidage (2b), et que la section de blocage (16) est, dans l'élément fonctionnel (3b), conduite de manière à pouvoir changer de hauteur dans un logement (20) dont la hauteur est supérieure à la hauteur de la section de blocage (16).

16. Dispositif fonctionnel de coffre selon au moins l'une des revendications précédentes, **caractérisé en ce que** le profilé de guidage (2, 2a, 2b) présente au moins une zone de mise en place et de retrait (6) à laquelle se raccorde frontalement le profilé d'arrêt (5, 5a, 5b) pour permettre la mise en place et le retrait d'au moins un élément fonctionnel (3, 3a, 3b).
